# EUROPEAN PATENT APPLICATION

(11) **EP 4 593 130 A1**
(43) Date of publication of application: **30.07.2025**
(21) Application number: 23868488.0
(22) Date of filing: 13.09.2023
(51) Int. Cl.: H01M 10/04, H01M 10/42

(54) **SECONDARY BATTERY AND BATTERY MODULE COMPRISING SAME**

(30) Priority: 23.09.2022 KR 20220121207; 08.09.2023 KR 20230119979
(71) Applicant: LG Energy Solution, Ltd., Seoul 07335 (KR)
(72) Inventor: SON, Byung Dae, Daejeon 34122 (KR)
(74) Representative: Goddar, Heinz J.
(86) International application number: PCT/KR2023/013751
(87) International publication number: WO 2024/063434

(57) **Abstract**

The present invention relates to a secondary battery and a battery module including the same, and more particularly, to a secondary battery in which stress generated in a core part of an internal jelly roll-type electrode assembly during charging and discharging of the secondary battery is relieved and supported to prevent irreversible electrode deformation occurring in the core part and collapse of the core part that may occur through accumulation of the irreversible electrode deformation from occurring, and a battery module including the same.

## Description

### TECHNICAL FIELD

### CROSS-REFERENCE TO RELATED APPLICATION

The present application claims the benefit of the priority of Korean Patent Application Nos. 10-2022-0121207, filed on September 23, 2022, and 10-2023-0119979, filed on September 8, 2023, which are hereby incorporated by reference in their entirety.

### TECHNICAL FIELD

The present invention relates to a secondary battery and a battery module including the same, and more particularly, to a secondary battery in which stress generated in a core part of an internal jelly roll-type electrode assembly during charging and discharging of the secondary battery is relieved and supported to prevent irreversible electrode deformation occurring in the core part and collapse of the core part that may occur through accumulation of the irreversible electrode deformation from occurring, and a battery module including the same.

### BACKGROUND ART

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases.

In addition, the electrode assembly embedded in the battery case may be a chargeable and dischargeable power generating element having a stacked structure of positive electrode/separator/negative electrode and may be classified into a jelly roll-type electrode assembly in which a long sheet-like positive electrode and negative electrode, which are coated with an active material, are wound with a separator interposed therebetween, a stacked-type electrode assembly in which a plurality of positive electrodes and negative electrodes, each of which has a predetermined size, are sequentially stacked with a separator interposed therebetween, and a stacked/folding type electrode assembly in which bicells or full cells, in which a predetermined unit of positive electrodes and negative electrodes are stacked with a separator interposed therebetween, are wound.

Among them, the jelly roll-type electrode assembly is widely manufactured because the jelly roll-type electrode assembly is easy to be manufactured and have an advantage of high energy density per weight. The jelly roll-type electrode assembly may be manufactured by assembling a stack in which a long sheet-shaped positive electrode and negative electrode are stacked with a separator interposed therebetween, and winding the sheet in a longitudinal direction in a state in which a core is in contact with one end of the electrode stack. In addition, the jelly roll-type electrode assembly may be inserted into a battery case provided as a cylindrical metal can to form a cylindrical secondary battery.

The cylindrical secondary battery is gradually becoming higher capacity as technology develops, and as a result, shortage of a space available for battery elements such as electrodes occurs. As a result, there is a need for a method for effectively relieving the stress caused by stress in the cylindrical battery core, such as structural collapse phenomenon occurring inside the jelly roll-type electrode assembly due to contraction and expansion of the electrode.

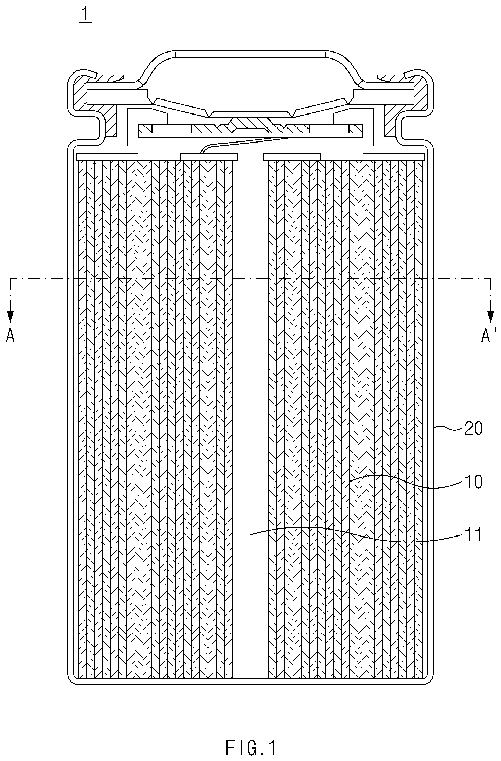

FIG. 1 is a cross-sectional view illustrating an example of a cylindrical secondary battery according to the related art. Referring to FIG. 1, the cylindrical secondary battery includes a jelly roll-type electrode assembly 10 formed by alternately stacking and winding electrodes and separators, and a can case 20 that accommodates the jelly roll-type electrode assembly. In addition, a core part 11 is formed at a winding center of the jelly roll-type electrode assembly 10. The core part 11 may be an empty space formed by winding a stack of the electrodes and the separators with a winding core to form the jelly roll-type electrode assembly 10 and then remove the winding core.

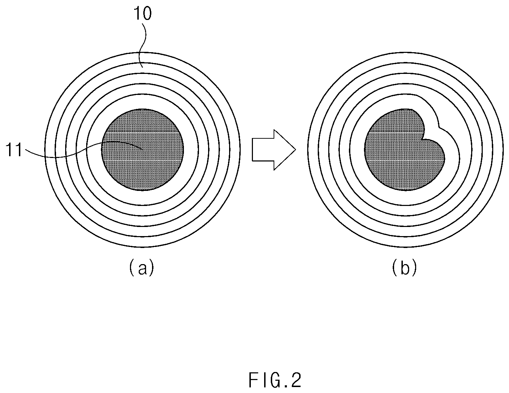

FIG. 2 is a cross-sectional view taken along line A-A' of FIG. 1. Referring to FIG. 2, FIG. 2(a) illustrates an initial state before the core part 11 of the jelly roll-type electrode assembly 10 collapses. When charging and discharging are performed in the state illustrated in FIG. 2(a), the electrode assembly 10 and the core part 11 of the electrode assembly 10 are repeatedly expanded and contracted. As a result, the electrode of the core part 11 is deformed or collapses due to accumulation of the deformation. FIG. 2(b) illustrates a state of the deformation and collapse of the core part 11.

If the deformation or collapse occurs inside the core part 11 of the electrode assembly 10, there is a risk of an internal short circuit that may lead to a micro-short or explosion, such as tearing of the separator due to an electrode edge, etc., which is a problem.

### DISCLOSURE OF THE INVENTION

### TECHNICAL PROBLEM

The present invention has been invented to solve the above problems, and an object of the present invention is to provide a secondary battery in which stress generated in a core part of an internal jelly roll-type electrode assembly during charging and discharging of the secondary battery is relieved and supported to prevent irreversible electrode deformation occurring in the core part and collapse of the core part that may occur through accumulation of the irreversible electrode deformation from occurring, and a battery module including the same.

In addition, the present invention provides a secondary battery, in which a problem of poor winding due to rigidity of a core part of an electrode assembly occurs when winding a jelly roll-type electrode assembly including the core part having a small diameter is prevented from occurring, and a battery module including the same.

### TECHNICAL SOLUTION

A secondary battery according to the present invention includes a jelly roll-type electrode assembly in which a positive electrode, a negative electrode, and a separator are wound, a case configured to accommodate the electrode assembly, and an electrolyte accommodated together with the electrode assembly within the case, wherein a swelling tape that is expanded when absorbing the electrolyte is attached to one surface of the separator disposed to surround a core part that is a winding center of the electrode assembly, wherein the swelling tape includes a base material, and an adhesive layer disposed on a surface of both surfaces of the base material, which faces the separator, wherein the base material is disposed on an opposite surface of the surface on which the adhesive layer is disposed and includes a plurality of convex portions, each of which has a protruding shape.

The base material may include a polymer material.

One surface of the separator may be a surface of both the surfaces of the separator, which faces the core part.

The electrode assembly may have a shape in which a first separator, a negative electrode, a second separator, and a positive electrode are sequentially stacked, and the swelling tape may be attached to the second separator.

The swelling tap may be attached to the separator so that a core-side end of the separator and a core-side end of the swelling tape coincide with each other.

The convex portion may have a shape that is gradually narrowed upward from a lower side, based on a cross-sectional view taken along a plane perpendicular to a winding axis of the electrode assembly.

The convex portion may have a shape extending in a width direction of the separator, and the plurality of convex portions may be arranged so that an upper side of the convex portion is spaced apart from the adjacent convex portion in a longitudinal direction of the separator, and a lower side of the convex portion is in contact with the adjacent convex portion in the longitudinal direction of the separator.

The convex portion may have a shape that is a portion of a semicircle or a circle, based on the cross-sectional view taken along the plane perpendicular to the winding axis of the electrode assembly.

The convex portion may have a trapezoidal shape, based on the cross-sectional view taken along the plane perpendicular to the winding axis of the electrode assembly.

The trapezoidal shape may be an equilateral trapezoidal shape.

The core part may have a diameter (P) of 3.2 mm to 3.6 mm, and the base material may have a thickness (t) of 30 um to 50 um.

A length (U) of a lower side of the convex portion having the trapezoidal shape may be 0.1 mm to 0.3 mm, and
an angle (θ) of the convex portion, which is an angle formed by meeting two straight lines formed by extending a pair of non-parallel opposite sides in the trapezoidal shape, may be 6.5 degrees to 7.9 degrees.

A length (U) of a lower side of the convex portion having the trapezoidal shape may be 0.4 mm to 0.6 mm, and
an angle (θ) of the convex portion, which is an angle formed by meeting two straight lines formed by extending a pair of non-parallel opposite sides in the trapezoidal shape, may be 16 degrees to 20 degrees.

A battery module according to the present invention includes the secondary battery disclosed above, and a housing in which a plurality of secondary batteries are accommodated.

### ADVANTAGEOUS EFFECTS

In the secondary battery and the battery module including the same according to the present invention, the stress generated in the core part of the internal jelly roll-type electrode assembly during charging and discharging of the secondary battery may be relieved and supported to prevent the irreversible electrode deformation occurring in the core part and the collapse of the core part that may occur through the accumulation of the irreversible electrode deformation from occurring.

In addition, in the secondary battery and the battery module including the same according to the present invention, the problem of the poor winding due to the rigidity of the core part of the electrode assembly occurs when winding the jelly roll-type electrode assembly including the core part having the small diameter may be prevented occurring.

### BRIEF DESCRIPTION OF THE DRAWINGS

FIG. 1 is a cross-sectional view illustrating an example of a cylindrical secondary battery according to the related art.
FIG. 2 is a cross-sectional view taken along line A-A' of FIG. 1.
FIG. 3 is a cross-sectional view of a secondary battery, taken along line A-A' of FIG. 1 according to Embodiment 1 of the present invention.
FIG. 4 is a perspective view illustrating a state in which a jelly roll-type electrode assembly of the secondary battery is folded to be exploded according to Embodiment 1 of the present invention.
FIG. 5 is an enlarged perspective view of a portion B of FIG. 3.
FIG. 6 is a side view of a configuration when viewed in a direction of an arrow E of FIG. 5.
FIG. 7 is a side view illustrating a state in which winding of the jelly roll-type electrode assembly using a core in the secondary battery starts according to Embodiment 1 of the present invention.
FIG. 8 is a side view illustrating another modified example of the embodiment illustrated in FIG. 7.
FIG. 9 is a side view illustrating a state in which a swelling tape is attached in a secondary battery according to Embodiment 2 of the present invention.
FIG. 10 is a side view illustrating a state in which a swelling tape is attached in a secondary battery according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

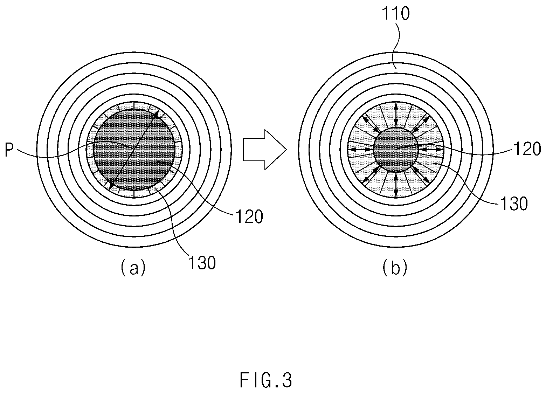

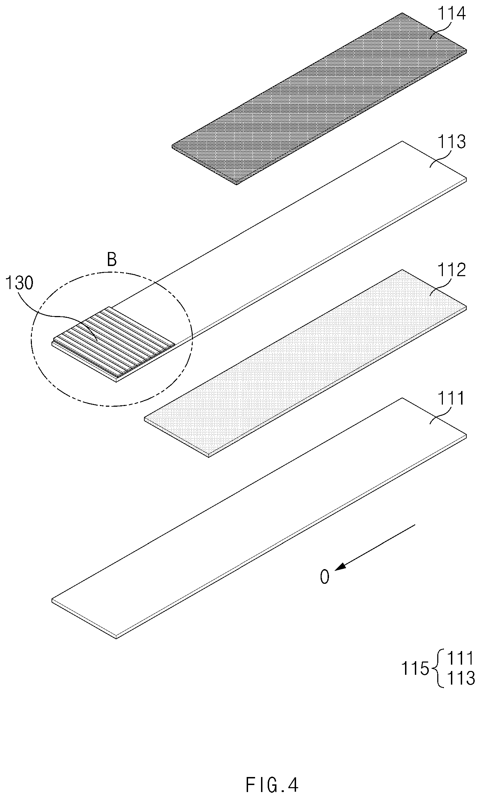

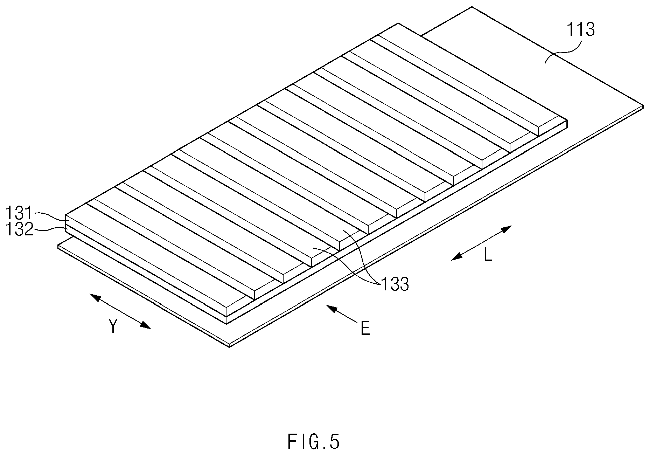

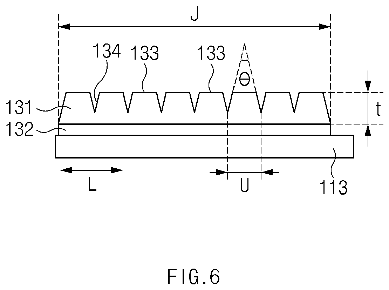

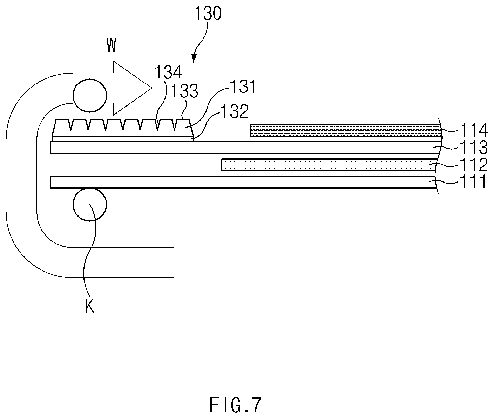

FIG. 1 is a cross-sectional view illustrating an example of a cylindrical secondary battery according to the related art. FIG. 2 is a cross-sectional view taken along line A-A' of FIG. 1. FIG. 3 is a cross-sectional view of a secondary battery, taken along line A-A' of FIG. 1 according to Embodiment 1 of the present invention. FIG. 4 is a perspective view illustrating a state in which a jelly roll-type electrode assembly of the secondary battery is folded to be exploded according to Embodiment 1 of the present invention. FIG. 5 is an enlarged perspective view of a portion B of FIG. 3. FIG. 6 is a side view of a configuration when viewed in a direction of an arrow E of FIG. 5. FIG. 7 is a side view illustrating a state in which winding of the jelly roll-type electrode assembly using a core in the secondary battery starts according to Embodiment 1 of the present invention.

Referring to FIGS. 3, 4, and 7, a secondary battery according to Embodiment 1 of the present invention includes an electrode assembly 110, a case, and an electrolyte, and a swelling tape 130 is attached to a core part 120 that is a central portion of the electrode assembly 110.

The electrode assembly 110 may be a jelly roll-type electrode assembly 110 formed by alternately stacking and winding a negative electrode 112, a positive electrode 114, and a separator 115. The case may be a case that accommodates the electrode assembly. The case may be a can case having a cylindrical shape. The electrolyte (not shown) may be a liquid accommodated together with the electrode assembly 110 in the case.

In addition, the core part 120 is formed at a winding center of the jelly roll-type electrode assembly 110. The core part 120 may be an empty space defined by winding a stack of the electrode and the separator 115 around a core K to form the jelly roll-type electrode assembly 110 and then removing the core K.

In the secondary battery according to Embodiment 1 of the present invention, the swelling tape 130 is attached to one side of the separator 115 disposed to surround the core part 120, which is the winding center of the electrode assembly 110. Here, one side of the separator 115 may be a surface, which faces the core part 120, of both surfaces of the separator 115.

Specifically, referring to FIGS. 4 and 7, the electrode assembly 110 may be provided in a shape in which a first separator 111, a negative electrode 112, a second separator 113, and a positive electrode 114 are sequentially stacked and wound. In addition, the swelling tape 130 may be attached to the second separator 113 of the above-described two separators 115. This may be attached to the separator 115 inside the core. When attached to the separator 115 inside the core, since there is a distance from a facing portion between the positive electrode and the negative electrode, since it does not affect the battery reaction, there is no problem in change of battery characteristics. In addition, in terms of the battery manufacturing process, it may be more advantageous because the swelling tape 130 serves as a supporting function when holding the core K to wind the core K in a winding direction W (see FIG. 7). Here, the core K is two rods that hold a center of the separator 115 to proceed to the winding process. The core K rotates to form the jelly roll-type electrode assembly 110 through the winding process, and then the core K gets out.

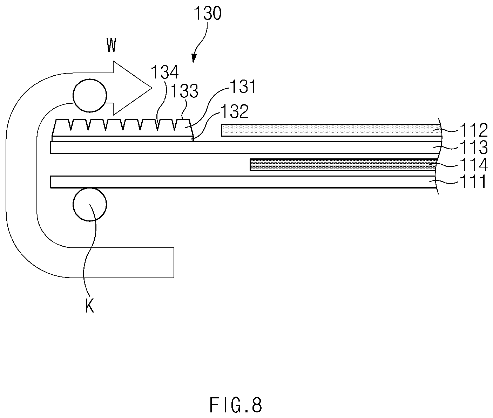

FIG. 8 is a side view illustrating another modified example of the embodiment illustrated in FIG. 7. Referring to FIG. 8, as another modified example of the electrode assembly, the electrode assembly 110 may be provided in a shape in which a first separator 111, a positive electrode 114, a second separator 113, and a negative electrode 112 are sequentially stacked and wound. In addition, the swelling tape 130 may also be attached to the second separator 113 of the above-described two separators 115. This may also be attached to the separator 115 inside the core.

Referring to FIGS. 4 and 5, the swelling tape 130 may be attached to the separator 115 so that a core-side end of the separator 115 to which the swelling tape 130 is attached and a core-side end of the swelling tape 130 coincide with each other (specifically, the swelling tape 130 may be attached to coincide with the core-side end of the second separator 113). A core side is indicated by an O-directional arrow in FIG. 4. The core side may refer to a direction toward a winding center.

The swelling tape 130 may be a tape that is expanded when absorbing the electrolyte. For example, the swelling tape 130 may include a polymer material. The polymer material may be a material that has a property of absorbing the electrolyte, but does not react with the electrolyte. Specifically, the polymer material may include a polyurethane (PU) material.

Specifically, the swelling tape 130 may include a base material 131 and an adhesive layer 132. The adhesive layer 132 may be an adhesive material layer applied to one surface of the base material 131. In addition, specifically, the base material 131 of the swelling tape 130 may include a polymer material. Specifically, the base material 131 may include a polyurethane (PU) material. The base material 131 may be made of another material as long as it absorbs the electrolyte so as to be expanded. The expanded base material 131 may buffer or absorb an impact or stress. Alternatively, the base material 131 may serve to resist and support the impact or stress. The adhesive layer 132 may be disposed on a surface facing the separator 115 of both surfaces of the base material 131.

Referring to FIGS. 5 and 6, in the secondary battery according to Embodiment 1 of the present invention, a plurality of concave portions 134 and a plurality of convex portions 133 may be disposed on the base material 131. Specifically, the convex portion 133 may be disposed on a surface opposite to the surface on which the adhesive layer 132 is disposed. The concave portion 134 may have a recessed shape. The convex portion 133 may have a relatively taller and thicker shape compared to the concave portion.

For reference, the concave portion 134 and the convex portion 133 may be manufactured by laser etching by irradiating laser beams onto a tape. Alternatively, the concave portion 134 and the convex portion 133 may be manufactured in a pressing method using a mold.

In the secondary battery according to Embodiment 1 of the present invention, the swelling tape 130 may be attached to the separator 115 disposed on the core part 120 to relieve or support stress occurring in the core part 120 of the internal jelly roll-type electrode assembly 110 during the charging and discharging of the secondary battery. In addition, as a result, irreversible electrode deformation occurring in the core part 120 and collapse of the core part 120 occurring through accumulation of the deformation may be prevented.

Referring to FIG. 3, FIG. 3(a) illustrates a state before the core part 120 is expanded and contracted before the electrolyte is injected, and FIG. 3(b) illustrates a state after the core part 120 is expanded and contracted after the electrolyte is injected. Referring to FIG. 3(b), due to the swollen swelling tape 130, it is see that even after the expansion and contraction of the core part 120 are repeated, the core part 120 may be maintained in shape without being deformed or collapsing.

FIG. 6 is a side view of a configuration when viewed in a direction of an arrow E of FIG. 5. Referring to FIG. 6, the convex portion 133 may be formed in a shape in which a width is gradually narrowed upward from a lower side, based on a cross-sectional view taken along a plane perpendicular to the winding axis of the electrode assembly 110. In addition, referring to FIG. 5, the convex portion 133 may be provided to extend in a width direction Y of the separator 115. As illustrated in FIG. 4, a width of the swelling tape 130 may be the same as the width of the separator 115. Referring to FIG. 6, a length J of the swelling tape 130 based on the longitudinal direction L of the separator 115 may be provided to be neither too long nor too short. Specifically, the length J of the swelling tape 130 may be determined within a range that does not interfere with the battery reaction.

In addition, referring to FIGS. 5 and 6, the plurality of convex portions 133 may be arranged so that an upper side of the convex portion 133 may be spaced apart from the convex portion 133 adjacent in the longitudinal direction L of the separator 115, and a lower side of the convex portion 133 is in contact with the convex portion 133 adjacent in the longitudinal direction L of the separator 115.

Referring to FIG. 6, specifically, the convex portion 133 may be provided in a trapezoidal shape based on a cross-sectional view taken along the plane perpendicular to the winding axis of the electrode assembly 110. Here, the trapezoid may be most preferably an equilateral trapezoid.

If the shape of the convex part 133 is formed in this manner, when the jelly roll-type electrode assembly 110 including the cover part 120 having a small diameter is wound, the problem in which the poor winding occurs due to the rigidity of the swelling tape 130 attached to the core part 120 of the electrode assembly 110 may be prevented.

Specifically, the swelling tape 130 has to have a certain degree of rigidity in order to prevent the collapse of the core part 120, but this rigidity may cause difficulty in forming the winding in the core part 120. This is because the rigidity of the swelling tape 130 serves to apply force to loosen the winding again.

In addition, during the electrolyte injection operation after inserting the jelly roll-type electrode assembly 110, the swelling tape 130 may be expanded in volume, and this expansion of the swelling tape 130 may act as force in a direction of unwinding. The convex portion 133 of the present invention may solve the problem of the winding being loosened or not formed properly.

Specifically, since a space between the convex portions 133 serves to weaken the rigidity or repulsive force of the swelling tape 130, the problem of the winding being loosened or not formed properly due to the rigidity of the swelling tape 130 may be solved.

Referring to FIGS. 3 and 6, in the secondary battery according to Embodiment 1 of the present invention, a diameter P of the core part 120 may be 3.2 mm to 3.6 mm, and a thickness t of the base material 131 may be 30 um to 50 um (unit is micrometer). In addition, the thickness of the base layer excluding the convex portion may be about 1/4 to 1/3 of the thickness of the entire base layer. This may be the most advantageous thickness range in which the adhesive layer is not exposed, but forms the convex portion.

In addition, a length U of a lower side of the convex portion 133 having the trapezoidal shape may be 0.1 mm to 0.3 mm. In this case, an angle θ of the convex portion 133, which is an angle formed by meeting two straight lines formed by extending a pair of non-parallel opposite sides in the trapezoidal shape, may be 6.5 degrees to 7.9 degrees.

For reference, a calculation method is explained as follows. When the diameter P of the core part 120 is about 3.2 mm, a circumference of the core part 120 may be 3.2 mm When assuming that the length U of the lower side of the convex part 133 is about 0.2 mm, if dividing 10 mm by 0.2 mm, about 50 convex portions 133 may be formed around the core part 120. Therefore, if dividing 360 degrees by 50 degrees, an angle of the convex portion 133 may be obtained to about 7.2 degrees. In this case, if a tolerance range of about 10% is applied, 7.2 - 0.7 = 6.5 degrees, and 7.2 + 0.7 = 7.9 degrees.

In addition, the length U of the lower side of the convex portion 133 having the trapezoidal shape may be 0.4 mm to 0.6 mm. In this case, an angle θ of the convex portion 133, which is an angle formed by meeting two straight lines formed by extending a pair of non-parallel opposite sides in the trapezoidal shape, may be 16 degrees to 20 degrees.

This case may be calculated similarly. When the diameter P of the core part 120 is about 3.2 mm, a circumference of the core part 120 may be 3.2 mm When assuming that the length U of the lower side of the convex part 133 is about 0.5 mm, if dividing 10 mm by 0.2 mm, about 20 convex portions 133 may be formed around the core part 120. Therefore, if dividing 360 degrees by 20 degrees, an angle of the convex portion 133 may be obtained to about 18 degrees. In this case, if a tolerance range of about 10% is applied, 18 - 2 = 16 degrees, and 18 + 2 = 20 degrees.

In addition, the battery module according to the present invention may be formed including the secondary battery according to Embodiment 1 of the present invention described above, and a housing accommodating a plurality of secondary batteries.

### Embodiment 2

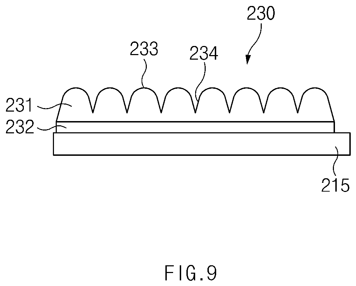

FIG. 9 is a side view illustrating a state in which a swelling tape is attached in a secondary battery according to Embodiment 2 of the present invention.

Embodiment 2 of the present invention differs from Embodiment 1 in that a shape of the convex portion is circular rather than trapezoidal.

The contents that are duplicated with Embodiment 1 will be omitted as much as possible, and Embodiment 2 will be described with a focus on the differences. That is, it is obvious that contents that are not described in Embodiment 2 may be regarded as the contents of Embodiment 1 if necessary.

Referring to FIG. 9, in the secondary battery according to Embodiment 2 of the present invention, a convex portion 233 may be formed in a shape that is a portion of a semicircle or a circle based on a cross-sectional view taken along a plane perpendicular to a winding axis of an electrode assembly.

In FIG. 9, it is shown that the convex portion 233 is formed on a base material in the shape of the semicircle. The base material 231 on which the semicircular convex portion 233 is formed may be attached to one surface of a separator 215 as in Embodiment 1, and an adhesive layer 232 may be formed on one surface of the base material 231 to adhere to a separator (215).

When the convex portion is formed in this manner, there is a difference in that an edge portion is relatively absent or small compared to the trapezoid.

### Embodiment 3

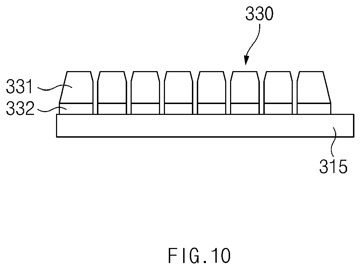

FIG. 10 is a side view illustrating a state in which a swelling tape is attached in a secondary battery according to Embodiment 3 of the present invention.

When compared to Embodiments 1 and 2 of the present invention, it is different from Embodiments 1 and 2 in that a purpose of the present invention is achieved by attaching a plurality of swelling tapes, each of which has a narrow width.

The contents that are duplicated with Embodiments 1 and 2 will be omitted as much as possible, and Embodiment 3 will be described with a focus on the differences. That is, it is obvious that the contents that are not described in Embodiment 3 may be supplemented as contents of Embodiments 1 and 2 if necessary.

Referring to FIG. 10, the secondary battery according to Embodiment 3 of the present invention may include a jelly roll-type electrode assembly 110 formed by winding a negative electrode, a positive electrode, and a separator, a case accommodating the electrode assembly, and an electrolyte accommodated together with the electrode assembly 110 within the case, and when the electrolyte is absorbed on one surface of the separator disposed to surround a core part, which is a winding center of the electrode assembly 110, a plurality of expanding swelling tapes 330 may be attached at predetermined intervals. In addition, each swelling tape 330 may include a base material 331 and an adhesive layer 332 formed on one of both surfaces of the base material facing the separator.

That is, the present invention is characterized in that each swelling tape 330 has a thin width and is attached in multiple rows. In Embodiment 3, one swelling tape 330 may serve as one convex part 133 and 233 in Embodiment 1 and 2.

When formed in this manner, there is no need to use the method such as the laser etching to separately implement the concave portions and the convex portions, and thus, manufacturing convenience may be achieved. In other words, it is possible to simply attach several swelling tapes 330 without the need for precise or expensive equipment such as the separate laser etching device, thereby enabling easier the manufacturing and use.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Secondary battery
110: Electrode assembly
111: First separator
112: Positive electrode
113: Second separator
114: Negative electrode
115, 215, 315: Separator
120: Core part
130, 230, 330: Swelling tape
131, 231, 331: Base material
132, 232, 332: Adhesive layer
133, 233: Convex portion
134, 234: Concave portion
K: Core
W: Winding direction

## Claims

1. A secondary battery comprising:
a jelly roll-type electrode assembly in which a negative electrode, a positive electrode, and a separator are wound;
a case configured to accommodate the electrode assembly; and
an electrolyte accommodated together with the electrode assembly within the case,
wherein a swelling tape that is expanded when absorbing the electrolyte is attached to one surface of the separator disposed to surround a core part that is a winding center of the electrode assembly,
wherein the swelling tape comprises:
a base material; and
an adhesive layer disposed on a surface of both surfaces of the base material, which faces the separator,
wherein the base material is disposed on an opposite surface of the surface on which the adhesive layer is disposed and comprises a plurality of concave portions and a plurality of convex portions.

2. The secondary battery of claim 1, wherein the base material comprises a polymer material.

3. The secondary battery of claim 1, wherein one surface of the separator is a surface of both the surfaces of the separator, which faces the core part.

4. The secondary battery of claim 3, wherein the electrode assembly has a shape in which a first separator, a negative electrode, a second separator, and a positive electrode are sequentially stacked, and
the swelling tape is attached to the second separator.

5. The secondary battery of claim 3, wherein the electrode assembly has a shape in which a first separator, a positive electrode, a second separator, and a negative electrode are sequentially stacked, and
the swelling tape is attached to the second separator.

6. The secondary battery of claim 1, wherein the swelling tap is attached to the separator so that a core-side end of the separator and a core-side end of the swelling tape coincide with each other.

7. The secondary battery of claim 1, wherein the convex portion has a shape that is gradually narrowed upward from a lower side, based on a cross-sectional view taken along a plane perpendicular to a winding axis of the electrode assembly.

8. The secondary battery of claim 7, wherein the convex portion has a shape extending in a width direction of the separator, and
the plurality of convex portions are arranged so that an upper side of the convex portion is spaced apart from the adjacent convex portion in a longitudinal direction of the separator, and a lower side of the convex portion is in contact with the adjacent convex portion in the longitudinal direction of the separator.

9. The secondary battery of claim 7, wherein the convex portion has a shape that is a portion of a semicircle or a circle, based on the cross-sectional view taken along the plane perpendicular to the winding axis of the electrode assembly.

10. The secondary battery of claim 7, wherein the convex portion has a trapezoidal shape, based on the cross-sectional view taken along the plane perpendicular to the winding axis of the electrode assembly.

11. The secondary battery of claim 10, wherein the trapezoidal shape is an equilateral trapezoidal shape.

12. The secondary battery of claim 10, wherein the core part has a diameter (P) of 3.2 mm to 3.6 mm, and
the base material has a thickness (t) of 30 um to 50 um.

13. The secondary battery of claim 12, wherein a length (U) of a lower side of the convex portion having the trapezoidal shape is 0.1 mm to 0.3 mm, and
an angle (θ) of the convex portion, which is an angle formed by meeting two straight lines formed by extending a pair of non-parallel opposite sides in the trapezoidal shape, is 6.5 degrees to 7.9 degrees.

14. The secondary battery of claim 12, wherein a length (U) of a lower side of the convex portion having the trapezoidal shape is 0.4 mm to 0.6 mm, and
an angle (θ) of the convex portion, which is an angle formed by meeting two straight lines formed by extending a pair of non-parallel opposite sides in the trapezoidal shape, is 16 degrees to 20 degrees.

15. A secondary battery comprising:
a jelly roll-type electrode assembly in which a negative electrode, a positive electrode, and a separator are wound;
a case configured to accommodate the electrode assembly; and
an electrolyte accommodated together with the electrode assembly within the case,
wherein a plurality of swelling tapes that are expanded when absorbing the electrolyte is attached at predetermined intervals to one surface of the separator disposed to surround a core part that is a winding center of the electrode assembly,
wherein each of the swelling tapes comprises:
a base material; and
an adhesive layer disposed on a surface of both surfaces of the base material, which faces the separator.

16. A battery module comprising:
the secondary battery of claim 1; and
a housing in which a plurality of secondary batteries are accommodated.
